# FASCICULE DE BREVET EUROPEEN

(11) **EP 0 620 806 B1**
(45) Date de publication et mention de la délivrance du brevet: **20.05.1998**
(21) Numéro de dépôt: 93914476.2
(22) Date de dépôt: 07.01.1993
(51) Int. Cl.: C04B 28/10, C04B 14/28, C04B 40/00

(54) **BETON RETAILLABLE, SON PROCEDE DE FABRICATION ET SON PROCEDE DE COFFRAGE**
WIEDERVERFORMBARER BETON, VERFAHREN ZU SEINER HERSTELLUNG UND SCHALUNGSVERFAHREN
CUTTABLE CONCRETE, PROCESS FOR THE MANUFACTURE AND MOULDING THEREOF

(30) Priorité: 09.01.1992 FR 9200165
(43) Date de publication de la demande: 26.10.1994
(73) Titulaire: CRUAUD, William, F-49170 Saint-Georges-sur-Loire (FR); CRUAUD, Christian, F-49170 Saint-Georges-sur-Loire (FR)
(72) Inventeur: CRUAUD, William, F-49170 Saint-Georges-sur-Loire (FR); CRUAUD, Christian, F-49170 Saint-Georges-sur-Loire (FR)
(74) Mandataire: Dawidowicz, Armand
(86) Numéro de dépôt international: FR9300011
(87) Numéro de publication internationale: WO9314043

(56) Documents cités:
- DE-A- 3 524 796
- DE-C- 30 073
- FR-A- 2 520 349
- FR-A- 2 635 772
- NL-A- 1 140

## Description

L'invention concerne un béton retaillable susceptible d'être taillé et sculpté aux outils traditionnels de sculpture pendant éventuellement plusieurs mois ainsi que le procédé de fabrication permettant son obtention et un procédé de coffrage permettant sa mise en oeuvre.

Il est bien connu que les bétons classiques comme les bétons siliceux ne présentent, et ceci dans un délai extrêmement court, qu'une très faible capacité de façonnage après décoffrage. De ce fait, les temps de durcissement ne permettent pas de réaliser des moulures compliquées au retravail. Cette très faible capacité au façonnage oblige la conception et la fabrication de coffrages ou de moules extrêmement sophistiqués afin de permettre des rendus de forme ou de modénatures. D'autre part, pour des raisons économiques, il est très souvent nécessaire de considérer le réemploi de ces coffrages ou moulages obligeant des séries qui, dans le cas de parements de façades, se concrétisent en des répétitions de modules ouvragés.

Dans le domaine des bétons, il a déjà été utilisé des granulats calcaires afin de donner à des bétons des caractéristiques propres et différentes de celles des bétons siliceux.

Ainsi, le brevet FR-A-2.520.349 décrit un procédé de fabrication d'une pierre artificielle ou synthétique mettant en oeuvre de façon successive des étapes de :
- mélange des ingrédients :
   . sable calcaire : 18 à 24 %
   . sable siliceux : 35 à 45 %
   . chaux et ciment blancs : 33 à 40 %
   . eau
- coulage en moules
- démoulage
- durcissement (naturel)
- sablage (destiné à imiter l'aspect extérieur d'une pierre naturelle).

Cette pierre artificielle se distingue de celle objet de l'invention par sa teneur en silice et en liant hydraulique qui ne permet pas une prise lente de l'ensemble ainsi que par la quantité d'eau qui, en quantité juste suffisante, équivaut à 10% environ en volume du volume total. De même, le procédé de moulage, qui nécessite le séchage du produit à une température de 35 à 40°C, diffère du procédé de coffrage généralement utilisé dans le cadre de la présente invention.

Le brevet FR-A-2.584.707 décrit quant à lui un procédé de fabrication d'une pierre calcaire recomposée caractérisé par le fait qu'il consiste à préparer un mélange de :
- Ciment blanc de 10% à 40%, de préférence de 22 % à 28%
- Calcaire sous forme de granulats et éventuellement de
- Poudre, de 40% à 80%, de préférence de 60 % à 66%
- Eau de 5% à 50%, de préférence de 11%
- Plastifiant de 0% à 5%, de préférence de 1%
que l'on malaxe dans un malaxeur horizontal, avant de compacter par damage à l'intérieur des moules, ou par coulage liquide dans les moules qui sont ensuite vibrés manuellement ou bien mécaniquement. Ce procédé se distingue de l'invention par son étape de vibrage qui, dans le cas du procédé de l'invention, est fortement déconseillée car elle engendre une ségrégation des éléments entrant dans la composition du béton rendant celui-ci impropre à tous façonnages, décoffrage, taille et sculpture à contrario de tous les procédés classiques dans lesquels le vibrage entraîne la liaison des différents éléments. Cette remarque s'applique de la même façon au brevet FR-A-2.414.028.

Enfin, les brevets FR-A-1.291.011 et 1.248.052 décrivent une pierre artificielle et un aggloméré qui, bien que présentant des compositions similaires à celles du béton objet de la présente invention, ne possèdent pas les caractéristiques essentielles de ce dernier en raison de proportions des composants totalement différentes et de la non utilisation de calcaires spécifiques.

Le but de la présente invention est donc de proposer un béton retaillable dont la dureté et les propriétés de résistance mécanique permettent de l'assimiler à un béton classique mais qui possède la propriété de pouvoir être retaillé pendant plusieurs mois avec des outils traditionnels de sculpture.

Un autre but de la présente invention est de proposer un béton dont la composition est telle qu'elle permet son utilisation en coffrage, en enduit, en pierre de parement, etc.

A cet effet, l'invention a pour objet un béton retaillable susceptible d'être retravaillé pendant plusieurs mois au moyen d'outils de sculpture et de taille traditionnels, caractérisé en ce qu'il est obtenu à partir d'un mélange d'un volume V de matières minérales se présentant essentiellement sous forme de calcaire oolithique concassé, d'un volume V1 inférieur à V de liant carbonaté de préférence à base de chaux et/ou de ciment, d'un volume V3 d'eau, ayant une valeur V3 comprise dans la plage [V x 30 %, V x 90 %], et éventuellement d'une charge.

Selon un mode de réalisation préféré de l'invention, la somme des volumes V et V3 représente 50 à 90 % du volume total du mélange et le volume d'eau V3 équivaut de préférence à 50 à 90 % du volume V de calcaires oolithiques.

L'invention concerne également un procédé de fabrication d'un béton, caractérisé en ce qu'on concasse un volume V de matières minérales à base essentiellement de calcaires oolithiques, en ce qu'on ajoute à ce volume V :
- un volume V1 de liant représentant 20 à 60 % de V
- un volume V2 de charges à dureté élevée représentant 0 à 40 % de V et
- un volume V3 d'eau représentant 30 à 80 % de V.

L'invention est relative en outre à un procédé de coffrage de ce béton, caractérisé en ce qu'on façonne et on pose dans un coffrage une armature, en ce qu'on coule la composition en quantité excessive à l'intérieur du coffrage, en ce qu'on laisse prendre la composition, en ce qu'on décoffre, en ce qu'on retaille les cotes supérieures de la composition au moyen d'outils de taille et de sculpture traditionnels.

D'autres caractéristiques et avantages de l'invention apparaîtront encore à la lecture de la description détaillée qui suit fournie ici uniquement à titre d'exemple.

Pour obtenir un béton retaillable susceptible d'être coupé de façon nette à l'aide d'outils manuels de taille classique pendant un laps de temps important, les étapes du procédé de fabrication doivent être précisément respectées. Ces étapes comprennent, dans un premier temps, un concassage des matières calcaires. Ces matières calcaires présentent, pour certaines au moins, un type de carbonates au faciès cristallin et à structure particuliers. Les calcaires les plus appropriés sont des calcaires oolithiques. Ce calcaire oolithique est par exemple un crétacé homogène à grain moyen d'une masse volumique apparente de 2000 kg/m³, de porosité de 26 à 28 %, d'une résistance à la compression de 18 à 28 MPA, d'une vitesse de propagation de 2700 à 2800 m/s, nommé demi-dur, ayant subi un contrôle et une action maîtrisant le taux d'hygrométrie pour les besoins du concassage afin d'aboutir à un concassage où tous les granulats du plus petit au plus gros (de 0,05 à 25 mm) sont calibrés. Les calcaires oolithiques sont des calcaires formés d'oolithes, c'est-à-dire de petits grains arrondis de petite taille. Chaque grain est formé de couches de calcaires concentriques autour d'un petit grain tel qu'un grain de sable. Ces calcaires oolithiques peuvent ne plus montrer une disposition en couches concentriques lorsque les petites cavités arrondies existant dans le calcaire sont remplies de matière homogène par de la calcite. On peut supposer que ces grains de petite taille constituent une solution colloïdale stable pendant le moment de la prise. Une fois les matières calcaires concassées, on y ajoute de l'eau, un liant et éventuellement des charges à dureté élevée.

Pour un volume total VT du mélange, si V représente le volume de calcaires oolithiques concassés, V1 le volume de liant carbonaté généralement constitué par de la chaux et/ou du ciment de type Portland, V2 le volume de charges à dureté élevée du type corindon, silice, billes de nylon ou similaire qui favorisent le compactage du mélange, V3 le volume d'eau en excès, on établit les relations suivantes entre V, V1, V2 et V3:
- 20 % x V ≤ V1 ≤ 60 % x V
- 0 % x V ≤ V2 ≤ 40 % x V
- 30 % x V ≤ V3 ≤ 90 % x V (A)
- 50 % x VT ≤ V + V3 ≤ 90 % x VT

On note que l'excès d'eau constitué par le volume V3 est probablement à la base des propriétés intéressantes de ce béton, à savoir ses capacités d'accepter la taille douce aux outils manuels tels que massette, ciseaux, manche bois, chemin de fer et autres outils de taille de pierre traditionnels par coupage du grain de sable jusqu'à 180 jours. A 180 jours ou moins, en fonction de la composition du liant, on obtient une résistance mécanique du béton du même ordre de celle des bétons traditionnels. De plus, cette composition est additionnable au béton traditionnel aciérable. Enfin, cette composition est elle-même armable et coulable monolithiquement de manière identique à un béton traditionnel. Au cours de la ou les prises, il est possible d'adjoindre par vaporisation ou toute autre méthode connue des durcisseurs et autres produits afin de donner au béton des vertus complémentaires (polissage, couleur, patine).

On constate également que V3, le volume d'eau ajouté dans le mélange, est proche de V et correspond donc à la moitié supérieure de la plage (A) indiquée ci-dessus dans le cas d'une application type coffrage ou moulage du béton et au contraire est compris dans la moitié inférieure de la plage (A) précisée ci-dessus dans le cas d'une application enduit. Quant aux proportions de liant, elles varient en fonction de la période de retaille désirée.

### Exemple 1 :

Ainsi, une composition préférée pour la réalisation du béton retaillable pendant une période de six à huit mois est la suivante :
- volume V de matières calcaires oolithiques concassées : 48 litres,
- volume V2 de charges à dureté élevée : 0
- volume de liant V1 égal à 11,5 litres, soit 24 % x V,
   la proportion de chaux et de ciment dans ce liant étant indifférente,
- volume V3 d'eau égal à environ 36 litres, soit 75% x V.

Ce béton est retaillable pendant six à huit mois. On utilisera de préférence, au niveau des calcaires oolithiques, des calcaires oolithiques dits tendres.

### Exemple 2 :

Une autre composition préférée pour la réalisation de béton retaillable pendant une période de deux jours à deux mois est la suivante :
- volume V de matières calcaires oolithiques concassées 1 48 litres,
- volume V1 de liant carbonaté : 15 litres, soit 31% de V,
- volume V2 de charges à dureté élevée : 10 litres, soit 21 % de V,
- volume V3 d'eau : 36 litres, soit 75 % de V.

On constate que le volume V ajouté au volume V3 représente 85% du volume total V_{T} du mélange.

En raison du coût des matières calcaires et de l'eau, on aboutit à un béton particulièrement bon marché.

### Exemple 3 :

Une composition préférée pour la réalisation d'enduit retaillable est la suivante :
- volume V de matières calcaires concassées demi-dures : 48 litres,
- volume V1 de liant hydraulique : 15 litres, soit 31 % x V,
- volume V2 de charges à dureté élevée : 10 litres, soit 21 % x V,
- volume V3 d'eau ajoutée : 22 litres, soit 46 % de V.

On constate là encore que la somme V plus V3 représente 74 % du mélange total.

Bien évidemment, il est possible dans chacun des exemples précités d'utiliser comme matières calcaires oolithiques concassées un mélange de sables dur, demi-dur et tendre.

Enfin, il est également possible, avec des compositions de ce type, de réaliser des revêtements de surface en additionnant et/ou en stratifiant ce béton avec du plâtre à mouler ou avec de la résine ou avec du béton se présentant sous forme de fibres. Il est encore possible également d'utiliser ce béton pour la fabrication de plaques destinées à constituer des pierres de parement. Dans ce cas, on disposera une composition aux proportions analogues à celles précitées de béton sur un panneau de composition variable en vue de réaliser un dallage ou des plaques de décoration intérieure.

Une autre application avantageuse du béton conforme à l'invention est la fabrication de moules réfractaires pour le coulage de matière à couler en fusion ou à prise à froid.

Les applications citées ci-dessus et la mise en oeuvre de ce béton ne constituent en aucun cas une liste exhaustive et limitative.

Dans le cas de béton destiné à la réalisation de structures porteuses ou autoportées, telles que des façades, le coulage du béton s'effectue dans des coffrages de type traditionnel tels que banches, coffrages métal ou coffrages bois usuels employés dans cette activité. Il est à noter que le coffrage s'effectue en gras, c'est-à-dire que la cote initiale est supérieure à la cote finie. Pour ce faire, on façonne et on pose une armature biocompatible permettant le renvoi de charges à l'intérieur du matériau, on coule la composition en quantité excessive à l'intérieur du coffrage, on laisse prendre la composition, on décoffre, on retaille les cotes supérieures de la composition au moyen d'outils de taille et de sculpture traditionnels.

Il est possible dans certains cas de mise en oeuvre de ce béton de prévoir dans le corps du coffrage des ouvertures ou un drain de manière à éliminer l'eau en excès.

Ainsi, à titre d'exemple de construction mettant en oeuvre ce procédé, on peut réaliser un mur de 6 mètres linéaires x 15 mètres de hauteur d'une épaisseur allant de 6 cm à 1 m. Le mur a été coulé selon le principe décrit ci-dessus, le décoffrage s'effectue à 8 jours, la première taille dite d'épannelage se fait entre le 10ème jour et le 60ème jour, la taille dite d'évidement s'effectue du 40ème au 100ème jour. Le polissage du béton de la présente invention se fait du 80ème au 120ème jour. Les finitions des sculptures, ornements et tailles fines sont effectuées entre le 100ème jour et le 180ème jour à la main ou aux outils traditionnels de taille, de pierre et de sculpture.

En outre, il est également possible d'agrémenter ce béton pour lui donner des effets esthétiques en ajoutant par exemple du sable de verre de bouteille ou tout autre type d'adjuvant utilisé de manière classique pour les bétons tels qu'un colorant.

Le béton conforme à l'invention offre l'avantage de permettre l'obtention d'un aspect et d'une couleur uniformes en addition au coffrage, en enduit, en pierre de parement, etc.

Ce béton qui présente une prise progressive dans le temps est appelé "pierre de la Possonnière - béton retaillable" de manière à le distinguer en raison de ses propriétés de retaille des bétons classiques.

## Revendications

1. Béton retaillable susceptible d'être retravaillé pendant plusieurs mois au moyen d'outils de sculpture et de taille traditionnels, caractérisé en ce qu'il est obtenu à partir d'un mélange d'un volume V de matières minérales se présentant essentiellement sous forme de calcaire oolithique concassé, d'un volume V1 inférieur à V de liant carbonaté de préférence à base de chaux et/ou de ciment, d'un volume V3 d'eau, ayant une valeur V3 comprise dans la plage [V x 30 %, V x 90%], et éventuellement d'une charge.

2. Béton retaillable selon la revendication 1, caractérisé en ce que la somme des volumes V3 et V de matières minérale représente 50 à 90 % du volume total V_{T} du mélange.

3. Béton retaillable selon l'une des revendications 1 et 2, caractérisé en ce que le volume V1 de liant, ajouté au volume V de matières minérales constituées essentiellement de calcaires oolithiques, a une valeur comprise dans la plage [V x 20 %, V x 60 %].

4. Béton retaillable selon l'une des revendications 1 à 3, caractérisé en ce que le mélange comprend en outre des charges à dureté élevée du type corindon, silice, billes de nylon.

5. Béton retaillable selon la revendication 4, caractérisé en ce que le volume V2 de charges à dureté élevée ajoutées dans le mélange correspond à une valeur en volume comprise dans la plage [V x 0 %, V x 40 %], V représentant le volume de matières calcaires oolithiques présentes dans le mélange.

6. Utilisation d'un béton retaillable selon l'une des revendications 1 à 5, caractérisé en ce qu'il est combiné et/ou stratifié avec du plâtre à mouler et est utilisé comme pierre de parement.

7. Utilisation d'un béton retaillable selon l'une des revendications 1 à 5, caractérisé en ce qu'il est utilisé comme enduit, le volume V3 d'eau étant égal à une valeur voisine de 40 % de V, V représentant le volume de matières calcaires oolithiques concassées.

8. Utilisation d'un béton retaillable selon l'une des revendications 1 à 5, caractérisé en ce qu'il est coulé à l'intérieur de coffres pour la réalisation d'ossatures porteuses ou autoportées, le volume V3 d'eau ayant une valeur voisine de 70 % de V, V représentant le volume de matières calcaires oolithiques concassées.

9. Utilisation d'un béton retaillable selon l'une des revendications 1 à 5, caractérisé en ce qu'il forme un moule réfractaire pour le coulage de matières à couler en fusion ou à prise à froid.

10. Procédé de fabrication d'un béton conforme à la revendication 1,
caractérisé en ce qu'on concasse un volume V de matières minérales à base essentiellement de calcaires oolithiques, en ce qu'on ajoute à ce volume V :
- un volume V3 d'eau compris dans la plage [30 % x V, 80 % x V],
- un volume V1 de liant compris dans la plage [20 % x V, 60 % x V] et
- un volume V2 de charges à dureté élevée compris dans la plage [0 % x V, 40 % x V].

11. Procédé de fabrication selon la revendication 10, caractérisé en ce qu'on concasse les matières minérales constituées essentiellement par des calcaires oolithiques de manière à obtenir une granulométrie homogène variant du micromètre à plusieurs dizaines de millimètres.

12. Procédé de coffrage d'un béton conforme à la revendication 1, caractérisé en ce qu'on façonne et on pose dans un coffrage une armature, en ce qu'on coule la composition en quantité excessive à l'intérieur du coffrage, en ce qu'on laisse prendre la composition, en ce qu'on décoffre, en ce qu'on retaille les cotes supérieures de la composition au moyen d'outils de taille et de sculpture traditionnels.

## Patentansprüche

1. Nachbearbeitbarer Beton, der geeignet ist, während mehrerer Monate mittels herkömmlicher Profilierungsund Schneidwerkzeuge umgearbeitet zu werden,
**dadurch gekennzeichnet,** daß er erhalten wird aus einer Mischung eines Volumens V an mineralischen Materialien, die im wesentlichen in der Form von zerkleinertem oolithischen Kalk vorliegen, eines Volumens V1, das kleiner ist als V, an als Karbonat vorliegendem und/oder Kohlendioxid enthaltendem Bindemittel, vorzugsweise auf der Basis von Kalk und/oder Zement, eines Volumens V3 an Wasser, das einen Wert V3 hat, der in dem Bereich [V x 30 %, V x 90 %] enthalten ist, und gegebenenfalls eines Füllstoffes.

2. Nachbearbeitbarer Beton nach Anspruch 1,
**dadurch gekennzeichnet,** daß die Summe des Volumens V3 und des Volumens V an mineralischen Materialien 50 - 90 % des Gesamtvolumens V_{T} der Mischung beträgt.

3. Nachbearbeitbarer Beton nach einem der Ansprüche 1 und 2,
**dadurch gekennzeichnet,** daß das Volumen V1 an Bindemittel, das zu dem Volumen V an mineralischen Materialien, die im wesentlichen durch oolithische Kalke gebildet sind, hinzugefügt wird, einen Wert hat, der in dem Bereich [V x 20 %, V x 60 %] liegt.

4. Nachbearbeitbarer Beton nach einem der Ansprüche 1 bis 3,
**dadurch gekennzeichnet,** daß die Mischung ferner Füllstoffe mit erhöhter Härte nach Art von Korund, Kieselerde oder Nylonkugeln aufweist.

5. Nachbearbeitbarer Beton nach Anspruch 4,
**dadurch gekennzeichnet,** daß das Volumen V2 an hinzugefügten Füllstoffen mit erhöhter Härte in der Mischung einem Volumenwert entspricht, der in dem Bereich [V x 0 %, V x 40 %] liegt, wobei V das Volumen an in der Mischung vorhandenen oolithischen Kalkmaterialien darstellt.

6. Verwendung eines nachbearbeitbaren Betons nach einem der Ansprüche 1 bis 5,
**dadurch gekennzeichnet,** daß er mit zu gießendem Formgips kombiniert und/oder geschichtet wird und als Verblendstein verwendet wird.

7. Verwendung eines nachbearbeitbaren Betons nach einem der Ansprüche 1 bis 5,
**dadurch gekennzeichnet,** daß er als überzug verwendet wird, wobei das Volumen V3 an Wasser, gleich einem Wert in der Nähe von 40 % von V ist, wobei V das Volumen an zerkleinerten oolithischen Kalkmaterialien darstellt.

8. Verwendung eines nachbearbeitbaren Betons nach einem der Ansprüche 1 bis 5, **dadurch gekennzeichnet,** daß er in das Innere von Schalungen gegossen wird zur Bildung von tragenden oder selbsttragenden Tragwerken, wobei das Volumen V3 an Wasser einen Wert in der Nähe von 70 % von V hat, wobei V das Volumen an zerkleinerten oolithischen Kalkmaterialien darstellt.

9. Verwendung eines nachbearbeitbaren Betons nach einem der Ansprüche 1 bis 5,
**dadurch gekennzeichnet,** daß er eine widerstandsfähige Form für das Gießen von schmelzflüssigen oder kalt abbindenden zu gießenden Materialien bildet.

10. Verfahren zur Herstellung eines Betons nach Anspruch 1,
**dadurch gekennzeichnet,** daß ein Volumen V an mineralischen Materialien auf der Basis im wesentlichen von oolithischen Kalken zerkleinert wird, daß zu diesem Volumen V zugefügt wird:
- ein Volumen V3 an Wasser in dem Bereich [30 % x V, 80% x V],
- ein Volumen V1 an Bindemittel in dem Bereich [20 % x V, 60 % x V] und
- ein Volumen V2 an Füllstoffen mit erhöhter Härte in dem Bereich [0 % x V, 40 % x V].

11. Verfahren zur Herstellung nach Anspruch 10,
**dadurch gekennzeichnet,** daß die mineralischen Materialien, die im wesentlichen durch oolithische Kalke gebildet sind, zerkleinert werden, um eine homogene Körnung zu erhalten, die zwischen einem Mikrometer bis zu mehreren zehn Millimetern variiert.

12. Verfahren zur Verschalung eines Betons nach Anspruch 1,
**dadurch gekennzeichnet,** daß eine Armierung geformt und in eine Schalung eingelegt wird, daß die Zusammensetzung in überschüssiger Menge in das Innere der Schalung gegossen wird, daß man die Zusammensetzung abbinden läßt, daß ausgeschalt wird, daß die Oberseiten der Zusammensetzung mittels herkömmlicher Schneid- und Profilierungswerkzeuge nachbearbeitet werden.

## Claims

1. Cuttable concrete adapted to be cut for several months by means of conventional sculpting and cutting tools,
characterized in that it is obtained from a mixture of a volume V of mineral materials present essentially in the form of crushed oolithic limestone, of a volume V1 less than V of carbonated binder preferably lime and/or cement based, of a volume V3 of water having a value V3 comprised within the range (V x 30%, V x 90%) and possibly of a filler.

2. Cuttable concrete according to claims 1,
characterized in that the sum of the volumes V3 and V of mineral material represents 50 to 90% of the total volume V_{T} of the mixture.

3. Cuttable concrete according to one of claims 1 and 2,
characterized in that the volume 1 of the binder, added to the volume V3 of mineral materials constituted essentially by oolithic limestones, has a value comprised within the range (V x 20%, V x 60%).

4. Cuttable concrete according to one of claims 1 to 3,
characterized in that the mixture comprises moreover high hardness fillers of the type of corundum, silica, nylon balls.

5. Cuttable concrete according to claim 4,
characterized in that the volume V2 of high hardness fillers added in the mixture corresponds to a value by volume comprised within the range (V x 0%, V x 40%), V representing the volume of oolithic limestone materials present in the mixture.

6. Use of a cuttable concrete according to one of claims 1 to 5,
characterized in that it is combined and/or stratified with molding plaster and is used as a paving stone.

7. Use of a cuttable concrete according to one of claims 1 to 5,
characterized in that it is used as a covering, the volume V3 of water being equal to a volume about 40% of v, V representing the volume of crushed oolithic limestone materials.

8. Use of a cuttable concrete according to one of claims 1 to 5,
characterized in that it is cast within coffers for the production of supporting or self supporting frameworks, the volume V3 of water having a value near to 70% of V, V representing the volume of crushed oolithic limestone materials.

9. Use of a cuttable concrete according to one of claims 1 to 5,
characterized in that it forms a refractory mold for the casting of materials to be melt cast or cold hardened.

10. Proces for the production of a concrete according to one of claims 1 to 5,
characterized in that a volume V of essentially oolithic limestone based mineral materials is crushed, in that there is added to this volume V :
- a volume V3 of water comprised within the range (30% x V, 80% x V),
- a volume V1 of binder comprised within the range (20% x V, 60% x V), and
- a volume V2 of high hardness fillers comprised within the range (0% x V, 40% x V).

11. Process for production according to claim 10,
characterized in that the mineral materials constituted essentially by oolithic limestones are crushed so as to obtain a homogenous granulometry varying from one micrometer to several tens of millimeters.

12. Process for casting a concrete according to claim 1,
characterized in that there is shaped and positioned armature within a casting, in that the composition is cast within the casing in excess quantity, in that the composition is allowed to set up, in that it is demolded, in that the upper sizes of the composition are cut by means of conventional cutting and sculpting tools.
